# EUROPEAN PATENT APPLICATION

(11) **EP 2 244 501 A1**
(43) Date of publication of application: **27.10.2010**
(21) Application number: 09711229.6
(22) Date of filing: 13.02.2009
(51) Int. Cl.: H04W 28/04, H04W 16/26, H04W 72/04

(54) **RADIO COMMUNICATION BASE STATION DEVICE, RADIO COMMUNICATION RELAY STATION DEVICE, RADIO COMMUNICATION TERMINAL DEVICE, RADIO COMMUNICATION SYSTEM, AND RADIO COMMUNICATION METHOD**

(30) Priority: 14.02.2008 JP 2008033553
(71) Applicant: Panasonic Corporation, Kadoma-shi Osaka 571-8501 (JP)
(72) Inventor: NAKAO, Seigo, Osaka 540-6207 (JP); HORIUCHI, Ayako, Osaka 540-6207 (JP); SAITO, Yoshiko, Osaka 540-6207 (JP); MIYOSHI, Kenichi, Osaka 540-6207 (JP); ISHII, Yoshikazu, Osaka 540-6207 (JP)
(74) Representative: Grünecker, Kinkeldey, Stockmair & Schwanhäusser Anwaltssozietät
(86) International application number: PCT/JP2009/000576
(87) International publication number: WO 2009/101816

(57) **Abstract**

It is possible to provide a radio communication base station device, a radio communication relay station device, a radio communication terminal device, a radio communication system, and a radio communication method which can minimize a delay and effectively use resources. When a terminal starts an uplink communication with a base station via a repeater, [ST403] a base station transmits to a repeater, Grant 1 for the base station to allocate an initial transmission resource to the terminal and Multi-direction Grant which can be applied either to retransmission from the terminal to the repeater or the relay from the repeater to the base station, and [ST404] the Grant 1 and the Multi-direction Grant are relayed to the terminal.

## Description

### Technical Field

The present invention relates to a radio communication base station apparatus, a radio communication relay station apparatus, a radio communication terminal apparatus, a radio communication system and a radio communication method.

### Background Art

3GPP-LTE (3rd Generation Partnership Project-Long Term Evolution) is studying a relay device (or "repeater" or "RN (Relay Node)") that relays both downlink (DL) signals and uplink (UL) signals to expand service areas.

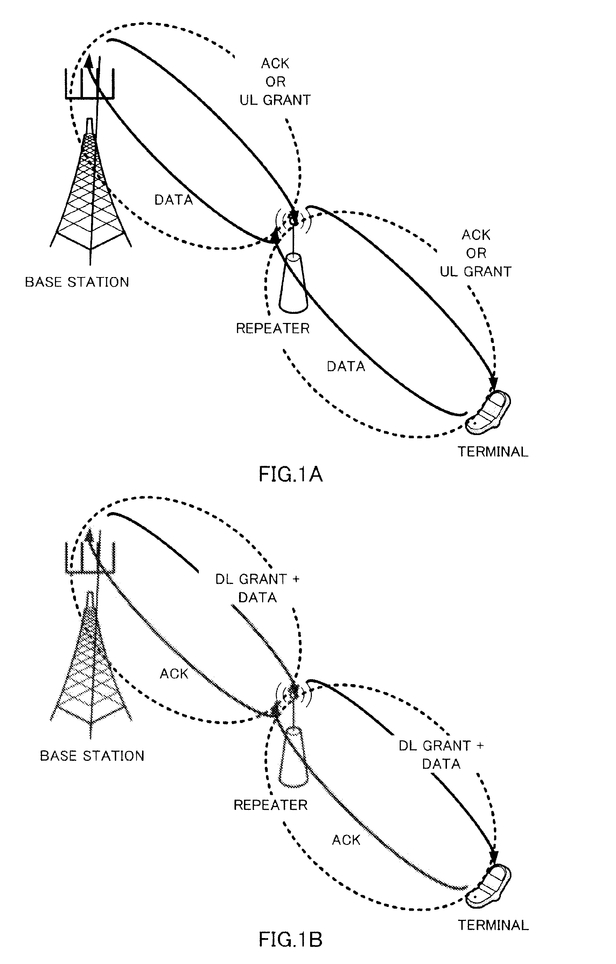

As shown in FIG.1, in a system including a repeater, a base station generates UL or DL allocation information to a target terminal and transmits the allocation information through the repeater. That is, when a base station allocates resources used for UL data transmission to a terminal, the base station transmits, to a repeater, "resource allocation control information for UL data transmission" (UL Grant) created in the base station and the repeater relays the Grant to the terminal as shown in FIG.1(A). The terminal transmits UL data according to the UL Grant relayed from the repeater. Upon receiving UL data from the terminal, the repeater relays the data to the base station according to the resource allocation for the repeater (UL Grant for the repeater), which is received from the base station.

In addition, when transmitting downlink data, the base station transmits downlink data along with "resource allocation control information for DL data transmission" (DL Grant) to the repeater as shown in FIG.1(B). Moreover, upon successfully receiving downlink data, the repeater relays the DL Grant and the downlink data to the terminal according to a command from the base station.

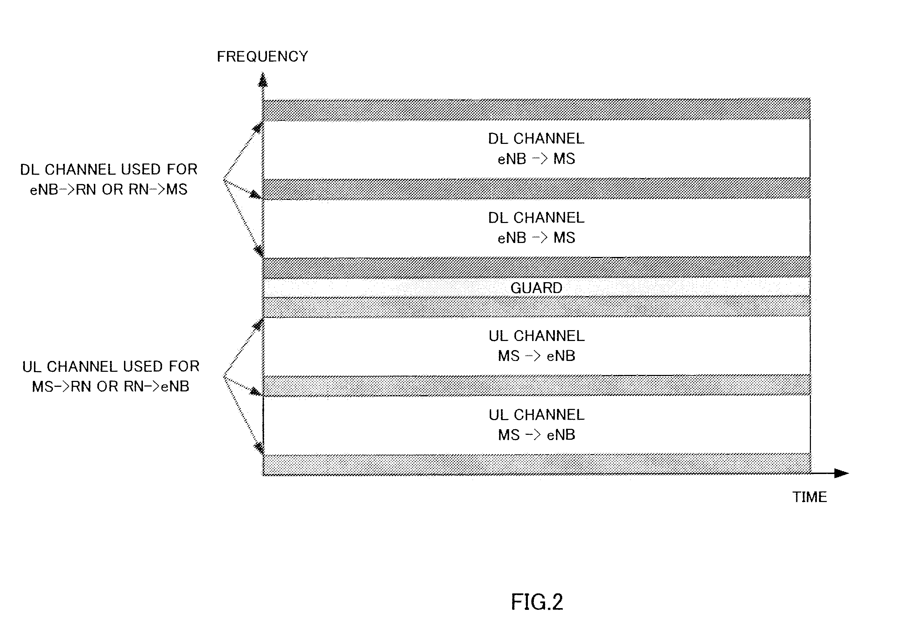

At this time, communication between the repeater and the base station and communication between the terminal and the repeater are performed using resources distributed in the frequency domain as shown in FIG.2. It is possible to obtain a frequency diversity effect consistently by using this resource arrangement, so that it is possible to reduce the burden of frequency selective scheduling on a base station.

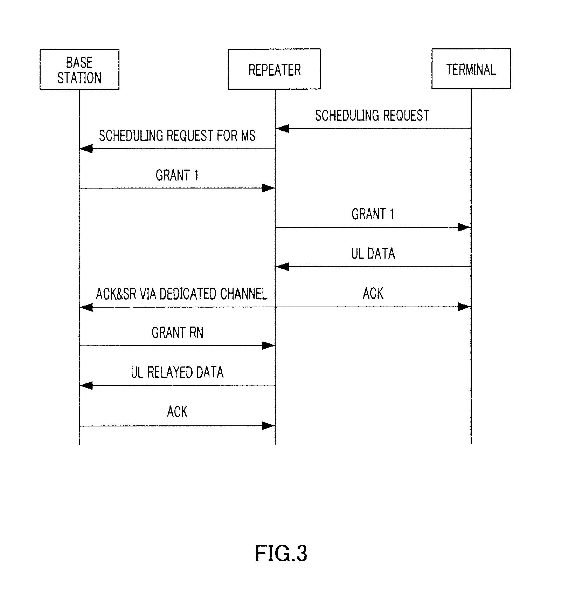

Here, communication steps in UL data communication in a system including this repeater will be explained with reference to FIG.3. As shown in FIG.3, when starting transmitting new UL data, a terminal transmits a resource allocation request signal (Scheduling Request: SR) to a repeater. The repeater relays the SR to a base station, and the base station transmits a Grant based on the SR. In addition, the repeater relays the Grant to the terminal.

Upon receiving the Grant, the terminal transmits UL data to the repeater, and if the UL data is transmitted to the repeater without error, the repeater requests the base station to transmit a relay Grant, so that communication from the repeater to the base station starts.

As for the above-described system including a repeater, when the repeater relays data to a base station, after a signal is successfully transmitted from a terminal to the repeater, the repeater requests the base station to transmit a Grant, so that the delay increases significantly compared to a system without a repeater.

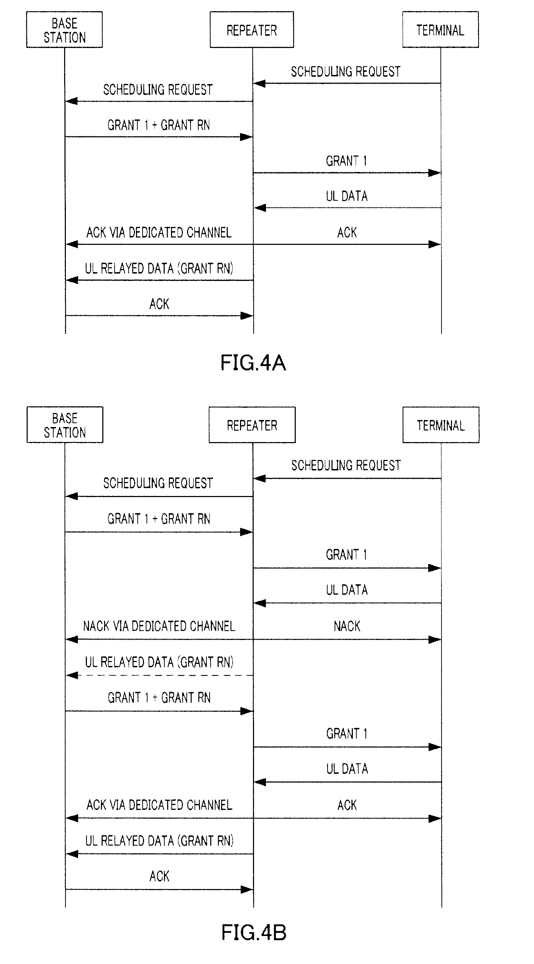

Therefore, as a method to reduce this delay, a joint scheduling method is possible whereby, when an SR is transmitted from a terminal to a base station, the base station allocates a Grant to both the terminal station and a repeater. Communication steps using this joint scheduling method is shown in FIG.4. As shown in FIG.4(A), with the joint scheduling method, a base station allocates, in response to an SR from a terminal, not only a resource used from the terminal to a repeater, b ut also a resource used for relay from the repeater to the base station at the same time. The repeater transmits only Grant 1 indicating the resource used for transmission from the terminal to the repeater, and the terminal transmits UL data according to Grant 1. Immediately after receiving a signal from the terminal, the repeater relays data based on allocation information (Grant RN) received in advance from the base station, so that it is possible to reduce the time it takes the data from the terminal to reach the base station.
Non-Patent Document 1: 3GPP TS 36.211 V8.0.0, "Physical Channels and Modulation (Release 8)," Sep. 2007

### Disclosure of Invention

### Problems to be Solved by the Invention

However, when retransmission occurs in communication from the terminal to the repeater, the resource for relay allocated to the repeater is no longer used as shown in FIG.4(B), and therefore this resource is wasted. That is, it is difficult to satisfy both efficient use of resources and a reduction in the system delay due to a repeater.

It is therefore an object of the present invention to provide a radio communication base station apparatus, a radio communication relay station apparatus, a radio communication terminal apparatus, a radio communication system and a radio communication method allowing minimization of delay and efficient use of resources.

### Means for Solving the Problem

The radio communication base station apparatus according to the present invention adopts a configuration to include: a resource allocating section that generates an uplink channel allocation signal for a radio communication terminal apparatus and an uplink resource allocation signal that can be used for retransmission from the radio communication terminal apparatus to a radio communication relay station apparatus and also used for relay from the radio communication relay station apparatus to a radio communication base station apparatus; and a transmitting section that transmits the generated uplink channel allocation signal and uplink resource allocation signal.

The radio communication relay station apparatus according to the present invention adopts a configuration to include: a receiving section that receives an uplink channel allocation signal for a radio communication terminal apparatus and an uplink resource allocation signal that can be used for retransmission from the radio communication terminal apparatus to a subject radio communication relay station apparatus and also used for relay from the subject radio communication relay station apparatus to a radio communication base station apparatus; a first relay section that relays the received uplink channel allocation signal and uplink resource allocation signal to the radio communication terminal apparatus; an error detecting section that detects whether or not a signal received from the radio communication terminal apparatus has an error; and a second relay section that, when the error detecting section detects no error, relays the signal received from the radio communication terminal apparatus to the radio communication base station apparatus based on the uplink resource allocation signal.

The radio communication terminal apparatus according to the present invention adopts a configuration to include: a receiving section that receives an uplink channel allocation signal for a subject radio communication terminal apparatus and an uplink resource allocation signal that can be used for retransmission from the subject radio communication terminal apparatus to a radio communication relay station apparatus and also used for relay from the radio communication relay station apparatus to a radio communication base station apparatus; and a transmitting section that transmits a first transmission data based on the uplink channel allocation signal and transmits retransmission data based on the uplink resource allocation signal.

The radio communication system according to the present invention adopts a configuration to include: a resource allocating section that generates an uplink channel allocation signal for a radio communication terminal apparatus and an uplink resource allocation signal that can be used for retransmission from the radio communication terminal apparatus to a radio communication relay station apparatus and also used for relay from the radio communication relay station apparatus to a radio communication base station apparatus; and a transmitting section that transmits the generated uplink channel allocation signal and uplink resource allocation signal, a radio communication relay station apparatus including: a receiving section that receives the uplink channel allocation signal and the uplink resource allocation signal; a first relay section that relays the received uplink channel allocation signal and uplink resource allocation signal to the radio communication terminal apparatus; an error detecting section that detects whether or not a signal received from the radio communication terminal apparatus has an error; and a second relay section that, when the error detecting section detects no error, relays the signal received from the radio communication terminal apparatus to the radio communication base station apparatus, and a radio communication terminal apparatus including: a receiving section that receives the uplink channel allocation signal and the uplink resource allocation signal; and a transmitting section that transmits a first transmission data based on the uplink channel allocation signal and transmits retransmission data based on the uplink resource allocation signal.

The radio communication method according to the present invention includes the steps of: when a signal transmitted from a radio communication terminal apparatus does not have an error, relaying the signal from a radio communication relay station apparatus to a radio communication base station apparatus based on an uplink resource allocation signal that can be used for retransmission from the radio communication terminal apparatus to the radio communication relay station apparatus and also used for relay from the radio communication relay station apparatus to the radio communication base station apparatus; and when the signal transmitted from the radio communication terminal apparatus has the error, retransmitting the signal from the radio communication terminal apparatus based on the uplink resource allocation signal.

### Advantageous Effects of Invention

According to the present invention, it is possible to minimize delay and efficiently use resources.

### Brief Description of Drawings

FIG.1 is a conceptual diagram showing a repeater that relays between a base station and a terminal;
FIG.2 is a drawing showing an exemplary allocation of time and frequency resources;
FIG. 3 is a sequence diagram showing steps of UL data communication;
FIG.4 is a sequence diagram showing steps of communication using a joint scheduling method;
FIG.5 is a block diagram showing a configuration of a base station according to an embodiment of the present invention;
FIG.6 is a block diagram showing a configuration of a terminal according to an embodiment of the present invention;
FIG.7 is a block diagram showing a configuration of a repeater according to an embodiment of the present invention;
FIG.8 is a sequence diagram showing steps of communication between the base station shown in FIG. 5, the terminal shown in FIG.6 and the repeater shown in FIG.7; and
FIG.9 is a sequence diagram showing another example of steps of communication between the base station shown in FIG.5, the terminal shown in FIG.6 and the repeater shown in FIG.7.

### Best Mode for Carrying Out the Invention

Now, embodiments of the present invention will be described in detail with reference to the accompanying drawings.

### (Embodiment)

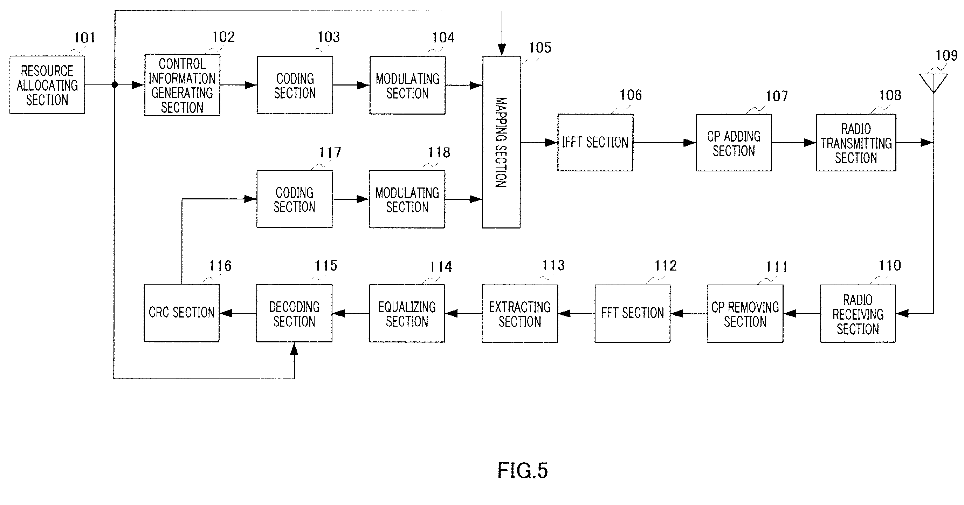

The configuration of a base station according to an embodiment of the present invention will be explained with reference to FIG. 5. In this base station, resource allocating section 101 allocates resources for UL data to a terminal or a repeater and outputs the resource allocation result to control information generating section 102, mapping section 105 and decoding section 115.

Control information generating section 102 generates control information to report the result of UL data resource allocation outputted from resource allocating section 101 per terminal and per repeater (relay station) and outputs the information to coding section 103. Here, control information per terminal and per repeater includes ID information indicating the terminal or the repeater to be the destination of that control information. For example, control information includes CRC bits masked with the ID number of the terminal to be the destination of that control information as terminal ID information.

Coding section 103 encodes control information outputted from control information generating section 102 in accordance with coding rate information inputted from a control section and so forth (not shown) and outputs the result to modulating section 104. Modulating section 104 modulates the control information outputted from coding section 103 and outputs the result to mapping section 105.

Mapping section 105 maps control information outputted from modulating section 104 or a response signal outputted from modulating section 118 to frequency resources (i.e. subcarriers) based on the result of resource allocation for UL data outputted from resource allocating section 101 and outputs the mapped signal to IFFT section 106.

IFFT section 106 generates an OFDM symbol by performing the IFFT (Inverse Fast Fourier Transform) on the signal outputted from mapping section 105 and outputs the generated OFDM symbol to CP adding section 107. CP adding section 107 adds the same signal as the rear end part of the OFDM symbol outputted from IFFT section 106 to the beginning part of the OFDM symbol as a CP (Cyclic Prefix) and outputs the result to radio transmitting section 108. Radio transmitting section 108 performs transmission processing on the OFDM symbol outputted from CP adding section 107, including D/A conversion, amplification, up-conversion and so forth, and transmits the result from antenna 109 to the repeater.

Meanwhile, radio receiving section 110 receives UL data transmitted from the repeater via antenna 109, performs reception processing on the UL data, including down-conversion, A/D conversion and so forth, and outputs the result to CP removing section 111.

CP removing section 111 removes the CP added to the UL data outputted from radio receiving section 110 and outputs the result to FFT section 112. FFT section 112 performs the FFT (Fast Fourier Transform) on the UL data outputted from CP removing section 111 and outputs the result to extracting section 113.

Extracting section 113 extracts the frequency component allocated to the repeater in the signal outputted from FFT section 112 and outputs the frequency component to equalizing section 114. Equalizing section 114 equalizes UL data outputted from extracting section 113 and outputs the result to decoding section 115.

Decoding section 115 decodes the UL data outputted from equalizing section 114 based on the resource allocation result for the UL data outputted from resource allocating section 101 and outputs the result to CRC section 116. CRC section 116 performs CRC computation of the UL data outputted from decoding section 115. Based on the result of CRC computation, CRC section 116 outputs an ACK to coding section 117 when there is no error, and outputs a NACK to coding section 117 when there is an error.

Coding section 117 encodes the response signal (ACK or NACK) outputted from CRC section 116 and outputs the result to modulating section 118. Modulating section 118 modulates the response signal outputted from coding section 117 and outputs the result to mapping section 105.

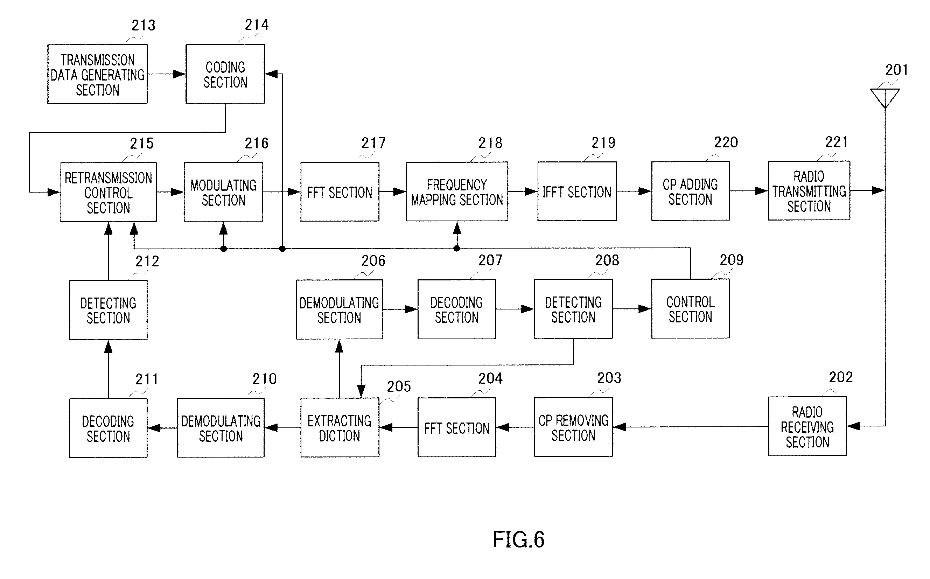

Next, the configuration of a terminal according to an embodiment of the present invention will be explained with reference to FIG.6. In this terminal, radio receiving section 202 receives an OFDM symbol including control information and a response signal from a repeater via antenna 201, performs reception processing on the OFDM symbol, including down-conversion, A/D conversion and so forth, and outputs the result to CP removing section 203. CP removing section 203 removes the CP added to the OFDM symbol outputted from radio receiving section 202 and outputs the result to FFT section 204.

FFT section 204 obtains the control information and the response signal from the repeater, which are mapped to a plurality of subcarriers by performing the FFT on the OFDM symbol outputted from CP removing section 203 and outputs them to extracting section 205. Extracting section 205 extracts the control information and the response signal from a plurality of subcarriers outputted from FFT section 204 based on resource information about the response signal outputted from detecting section 208, outputs the control information to demodulating section 206 and outputs the response signal to demodulating section 210.

Demodulating section 206 demodulates the control information outputted from extracting section 205 and outputs the result to decoding section 207. Decoding section 207 decodes the control information outputted from demodulating section 206 and outputs the result to detecting section 208.

Detecting section 208 performs blind detection as to whether or not the control information outputted from decoding section 207 is directed to the subject terminal. For example, detecting section 208 detects that control information indicating CRC=OK (no error) is directed to the subject terminal by demasking of CRC bits with the ID number of the subject terminal. Detecting section 208 outputs the control information directed to the subject terminal, that is, the result of resource allocation for UL data to the subject terminal, to control section 209. In addition, detecting section 208 outputs, to extracting section 205, resource information about the response signal from the repeater, which is associated, one-on-one, with resources for UL data for the subject terminal.

Control section 209 designates the resource to be used to transmit UL data to frequency mapping section 218 and designates the MCS to coding section 214 and modulating section 216 based on control information directed to the subject terminal outputted from detecting section 208. In addition, when retransmission of UL data occurs, control section 209 designates the retransmission timing of UL data, to retransmission control section 215.

Demodulating section 210 demodulates the response signal outputted from extracting section 205 and outputs the result to decoding section 211. Decoding section 211 decodes the response signal outputted from demodulating section 210 and outputs the result to detecting section 212.

Detecting section 212 detects whether the response signal outputted from decoding section 211 is an ACK or NACK and outputs the detection result to retransmission control section 215.

Transmission data generating section 213 generates transmission data (UL data) to be transmitted to the base station and outputs the generated data to coding section 214. Coding section 214 encodes the UL data outputted from transmission data generating section 213 in accordance with the coding rate outputted from control section 209, and outputs the result to retransmission control section 215.

At the time of the first transmission, retransmission control section 215 holds the UL data outputted from coding section 214 and outputs the UL data to modulating section 216. Retransmission control section 215 holds the UL data until an ACK is reported from detecting section 212, and discards the held UL data when an ACK is reported. In addition, when receiving a NACK from detecting section 212 as a report, retransmission control section 215 outputs the UL data corresponding to the NACK among the held UL data to modulating section 216, at the timing designated by control section 209.

Demodulating section 216 demodulates the UL data outputted from retransmission control section 215 and outputs the result to FFT section 217. FFT section 217 transforms the time domain UL data into frequency domain UL data by performing the FFT on the UL data outputted from modulating section 216, and outputs the result to frequency mapping section 218.

Frequency mapping section 218 maps the frequency domain UL data outputted from FFT section 217 to the band outputted from control section 209 and outputs the result to IFFT section 219. IFFT section 219 transforms the frequency domain signal into a time domain signal by performing the IFFT on the signal outputted from frequency mapping section 218 and outputs the result to CP adding section 220.

CP adding section 220 adds a CP to the signal outputted from IFFT section 219 and outputs the result to radio transmitting section 221. Radio transmitting section 221 performs transmission processing on the signal outputted from CP adding section 220, including D/A conversion, amplification, up-conversion and so forth, and transmits a UL signal from antenna 201 to a repeater.

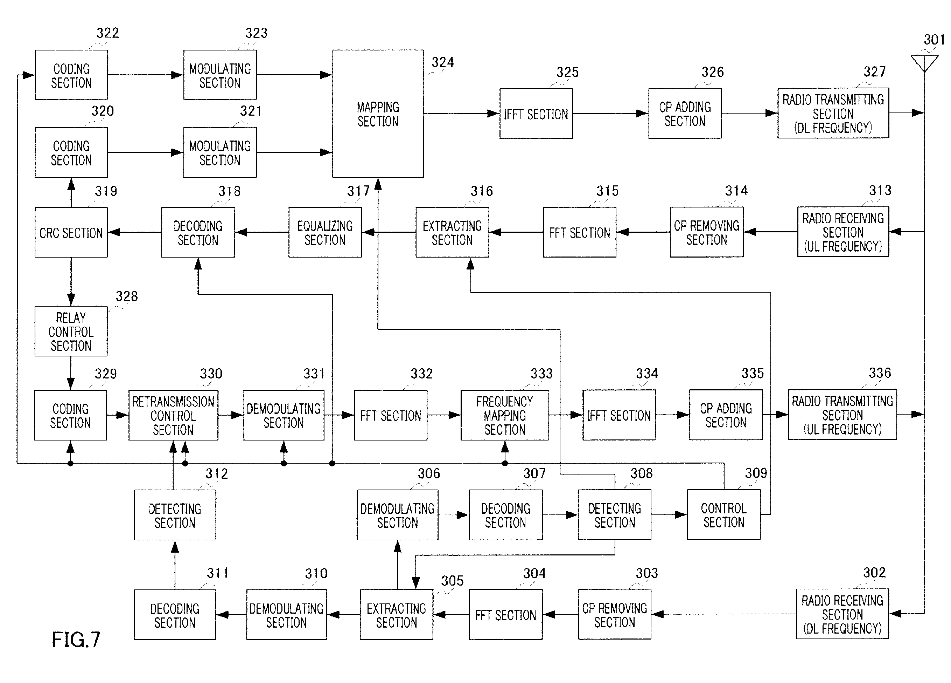

Next, the configuration of a repeater according to an embodiment of the present invention will be explained with reference to FIG.7. Radio receiving section (DL frequency) 302 receives, via antenna 301, an OFDM symbol including a control signal transmitted from the base station shown in FIG.5 or a response signal to the repeater, performs reception processing on the received OFDM symbol, including down-conversion, A/D conversion and so forth, and outputs the result to CP removing section 303. CP removing section 303 removes the CP added to the OFDM symbol outputted from radio receiving section 302 and outputs the result to FFT section 304.

FFT section 304 obtains the control information and the response signal mapped to a plurality of subcarriers by performing the FFT on the OFDM symbol outputted from CP removing section 303 and outputs them to extracting section 305. Extracting section 305 extracts the control information and the response signal from a plurality of subcarriers outputted from FFT section 304, outputs the control information to demodulating section 306 and outputs the response signals to demodulating section 310.

Demodulating section 306 demodulates the control information outputted from extracting section 305 and outputs the result to decoding section 307. Decoding section 307 decodes the control information outputted from demodulating section 306 and outputs the result to detecting section 308.

Detecting section 308 performs blind detection as to whether the control information outputted from decoding section 307 is directed to the terminal under the subject repeater, or directed to the subject repeater. For example, detecting section 308 detects that control information indicating that "CRC=OK" (no error) is directed to the terminal under the subject repeater by demasking of CRC bits with the ID number of the terminal under the subject repeater. Then, detecting section 308 detects that the control information indicating that "CRC=OK" (no error) is directed to the subject repeater by demasking of CRC bits with the ID number of the subject repeater. Detecting section 308 outputs, to control section 309, control information directed to the terminal under the subject repeater, that is, the result of resource allocation for UL data to the terminal under the subject repeater (the resource to be allocated to the subject repeater to receive data from the terminal) and the result of resource allocation for UL data to the subject repeater (the resource to be allocated to the subject repeater to relay data from the terminal.) In addition, detecting section 308 outputs, to mapping section 324, resource information that is associated, one-on-one, with resources for UL data for the terminal under the subject repeater and related to the response signal to be transmitted from the subject repeater, and outputs, to extracting section 305, resource information that is associated, one-on-one, with resources for UL data for the subject repeater and related to the response signal from the base station.

Control section 309 extracts information about the resource and the MCS which is likely to be used by the terminal to transmit UL data based on the content of control information directed to the terminal under the repeater, outputs the information about resource to extracting section 316 and outputs the information about MCS to decoding section 318. In addition, the control section 309 outputs control information directed to the terminal under the subject repeater to coding section 322. In addition, control section 309 designates, to frequency mapping section 333, the resource to be used to transmit UL data and designates the MCS to coding section 329 and modulating section 331 based on the control information directed to the subject repeater outputted from detecting section 308. In addition, when retransmission of UL relay data occurs, control section 309 designates the retransmission timing of UL relay data, to retransmission control section 330.

Meanwhile, demodulating section 310 demodulates the response signal outputted from extracting section 305, that is, the response signal to the uplink relay signal from the base station and outputs the result to decoding section 311. Decoding section 311 decodes the response signal outputted from demodulating section 310 and outputs the result to detecting section 312.

Detecting section 312 detects whether the response signal outputted from decoding section 311 is an ACK or NACK and outputs the detection result to retransmission control section 330.

Radio receiving section (UL frequency) 313 receives UL data transmitted from the terminal shown in FIG.6 via antenna 301, performs reception processing on the received UL data, including down-conversion, A/D conversion and so forth, and outputs the result to CP removing section 314.

CP removing section 314 removes the CP added to the UL data outputted from radio receiving section 313 and outputs the result to FFT section 315. FFT section 315 performs the FFT on the UL data outputted from CP removing section 314 and outputs the result to extracting section 316.

Extracting section 316 extracts, in accordance with resource information outputted from control section 309, the frequency component in UL data outputted from FFT section 315, which is allocated to the terminal under the subject repeater, and outputs the frequency component to equalizing section 317. Equalizing section 317 equalizes the UL data outputted from extracting section 316 and outputs the result to decoding section 318.

Decoding section 318 decodes the UL data outputted from equalizing section 317 in accordance with MCS information outputted from control section 309 and outputs the result to CRC section 319. CRC section 319 performs CRC computation on the UL data outputted from decoding section 318. Based on the result of CRC computation, CRC section 319 outputs, to coding section 320 and relay control section 328, ACKs when there is no error and NACKs when there is an error. In addition, when judging no error in UL data, CRC section 319 outputs the UL data to relay control section 328.

Coding section 320 encodes the response signal (ACK or NACK) outputted from CRC section 319 and outputs the results to modulating section 321. Modulating section 321 modulates the response signal outputted from coding section 320 and outputs the result to mapping section 324.

Coding section 322 encodes control information that is outputted from control section 309 and directed to the terminal under the subject repeater, and outputs the result to modulating section 323. Modulating section 323 modulates the control information outputted from coding section 322 and outputs the result to mapping section 324.

Mapping section 324 maps the response signal outputted from modulating section 321 and the control information outputted from modulating section 323 to frequency resources (i.e. subcarriers) and outputs the mapped signal to IFFT section 325. IFFT section 325 generates an OFDM symbol by performing the IFFT on the signal outputted from mapping section 324 and outputs the result to CP adding section 326.

CP adding section 326 adds a CP to the OFDM signal outputted from IFFT section 325 and outputs the result to radio transmitting section (DL frequency) 327. Radio transmitting section (DL frequency) 327 performs transmission processing on the OFDM signal outputted from CP adding section 326, including D/A conversion, amplification, up-conversion and so forth, and transmits the result from antenna 301 to the terminal.

When receiving an ACK and UL data from CRC section 319, relay control section 328 holds the UL data. In addition, relay control section 328 outputs the held UL data to coding section 329.

Coding section 329 encodes the UL data outputted from relay control section 328 according to the MCS (coding rate) outputted from control section 309 and outputs the result to retransmission control section 330.

At the time of the first relay and transmission of UL data, retransmission control section 330 holds the UL data outputted from coding section 329 and outputs the UL data to modulating section 331. Retransmission control section 330 holds the UL data until an ACK is reported from detecting section 312, and, when an ACK is reported, discards the held UL data. In addition, when a NACK is reported from detecting section 312, retransmission control section 330 outputs, to modulating section 331, the UL relay data corresponding to the NACK, among the held UL relay data, at the timing designated by control section 309.

Modulating section 331 modulates the UL data outputted from retransmission control section 330 according to the MCS (modulation method) outputted from control section 309 and outputs the result to FFT section 332. FFT section 332 performs the FFT on the UL relay data outputted from modulating section 331 to transform the time domain UL relay data into frequency domain UL relay data and outputs the result to frequency mapping section 333.

Frequency mapping section 333 maps the frequency domain UL relay data outputted from FFT section 332 to the resource (band) outputted from control section 309 and outputs the result to IFFT section 334.

IFFT section 334 performs the IFFT on the signal outputted from frequency mapping section 333 and outputs the result to CP adding section 335.

CP adding section 335 adds a CP to the signal outputted from IFFT section 334 and outputs the result to radio transmitting section (UL frequency) 336. Radio transmitting section (UL frequency) 336 performs transmission processing on the signal outputted from CP adding section 335, including D/A conversion, amplification, up-conversion and so forth, and transmits the result from antenna 301 to the base station.

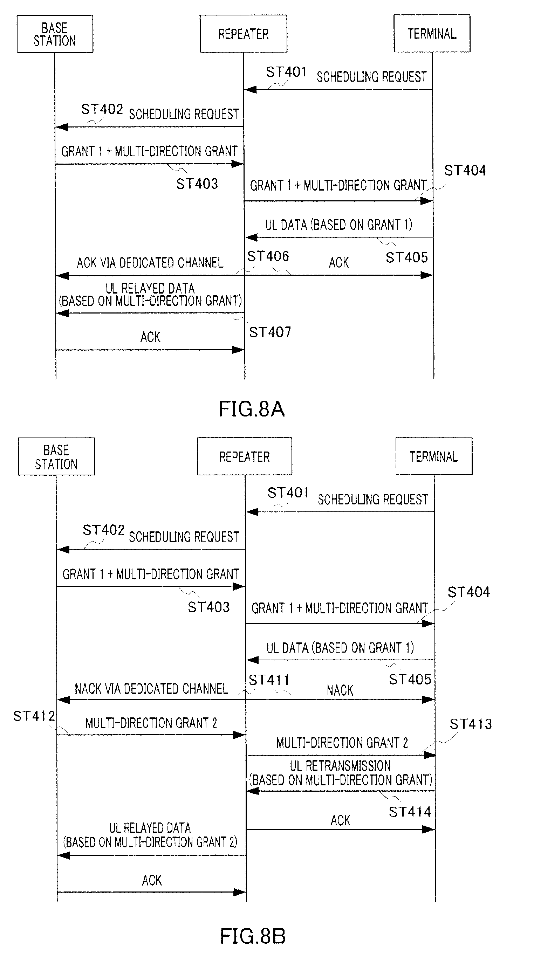

Next, communication steps related to the above-described base station, terminal and repeater will be explained with reference to FIG.8. In FIG.8(A), when a terminal starts transmitting signals, first, a resource allocation request (scheduling request: SR) is transmitted from the terminal to a repeater in ST 401, and the repeater relays the SR to a base station in ST 402. Here, this SR is transmitted in the same way as normal data via the channel determined in advance between, for example, the repeater and the terminal, and the base station and the repeater.

Upon receiving the SR, the base station generates an uplink channel allocation signal (Grant 1) for the terminal in response to a request and generates an uplink resource allocation signal (Multi-direction Grant) that can be used for retransmission from the terminal to the repeater and also used for relay from the repeater to the base station. In ST 403, these allocation signals (Grant 1 and Multi-direction Grant) generated in the base station are transmitted from the base station as OFDM signals.

In ST 404, upon receiving these allocation signals, the repeater relays both Grant 1 and Multi-direction Grant to the terminal through radio transmitting section (DL frequency) 327.

The terminal receives the allocation signals transmitted from the repeater and performs blind detection. Although the allocation signals received by the terminal include two Grants (Grant 1 and Multi-direction Grant) as described above, the terminal transmits a signal in accordance with Grant 1 at the time of the first transmission in ST 405.

Here, a case is shown where the repeater successfully receives signals transmitted from the terminal. In this case, the repeater transmits ACKs to the terminal and the base station in ST 406, and relays the uplink signal in accordance with Multi-direction Grant received in advance from the base station in ST 407.

On the other hand, as shown in FIG.8(B), when the repeater fails to receive the signal transmitted from the terminal, the repeater transmits NACKs to the terminal and the base station in ST 411. In ST 412, upon receiving the NACK from the repeater, the base station allocates the resource again and transmits Multi-direction Grant 2 to the repeater. In ST 413, the repeater relays Multi-direction Grant 2 to the terminal. In ST 414, the terminal retransmits UL data using the resource indicated by Multi-direction Grant received in advance, in response to the NACK (ST 411) from the repeater. In addition, when successfully receiving the signal retransmitted from the terminal, the repeater relays data to the base station using the resource indicated by Multi-direction Grant 2.

As described above, according to the present embodiment, when a terminal commences uplink communication with a base station via a repeater, the base station transmits, to the repeater, Grant for which the base station allocates a resource for the first transmission to the terminal and Multi-direction Grant applicable to retransmission from the terminal to the repeater and also applicable to relay from the repeater to the base station. Therefore, it is possible to minimize delay whether or not the repeater successfully receives the signal transmitted from the terminal, and it is possible to efficiently use the resource even if retransmission is performed.

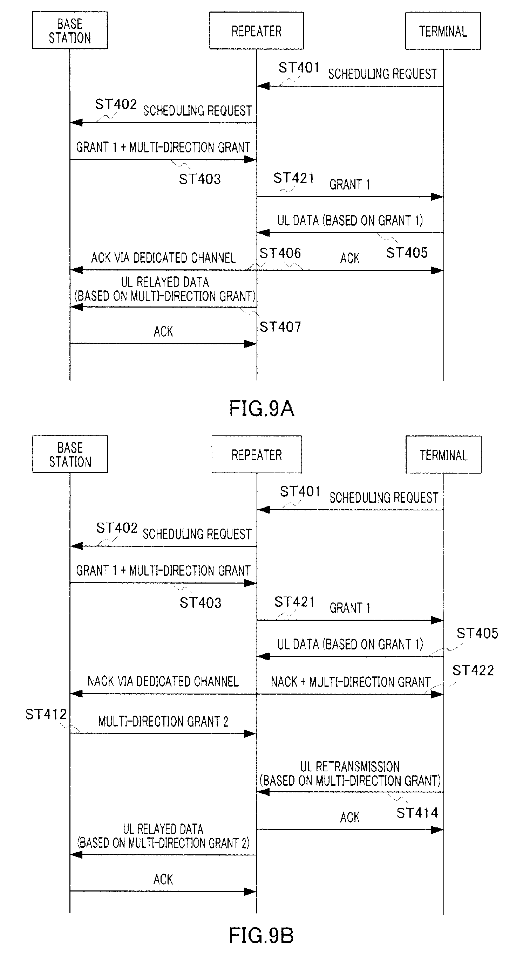

Here, although the present embodiment has been described such that a repeater transmits Multi-direction Grant transmitted from a base station to a terminal along with Grant 1, transmission of Multi-direction Grant may be limited as follows. That is, as shown in FIG.9, when receiving Grant 1 and Multi-direction Grant from a base station, the repeater may transmit only Grant 1 without Multi-direction Grant to a terminal in ST 421, and, when transmitting a NACK, the repeater may relay Multi-direction Grant to the terminal in ST 422. By this means, it is possible to further reduce an overhead associated with transmission on the control channel, so that it is possible to improve the efficiency of use of frequencies.

In addition, although the resource indicated by Grant 1 and Multi-direction Grant is used in the same data transmission (the first transmission or retransmission), setup of different MCSs or setup of different frequency bands is possible.

Moreover, the MCS and the frequency band for data according to Multi-direction Grant is determined taking into account the channel quality for transmission from the terminal to the repeater and the channel quality for relay from the repeater to the base station. If the difference between these channel qualities is large, the efficiency of use of frequencies is likely to deteriorate due to Multi-direction Grant. In order to prevent this, the base station may switch whether or not to use Multi-direction Grant depending on the difference between the channel qualities.

In addition, both the physical channel from a terminal to a repeater and the physical channel from the repeater to a base station may be distributed in the frequency domain as shown in FIG.2, and the transmission power is controlled so as to make the target SINR for each receiving side the same to prevent the above-described difference between the channel qualities.

Moreover, control bits for the transmission power used in a case in which a terminal uses resources and control bits for the transmission power used in a case in which a repeater uses resources are provided in Multi-direction Grant. By this means, the transmission power may be controlled so as to make the SINR for each receiving side the same in both cases.

Since the size (transport block size) of original data set in Multi-direction Grant and Grant 1 is the same, the base station may compress and transmit these two Grants using this advantage.

Moreover, when there are a plurality of terminals under a repeater, it is difficult for the repeater to receive a signal from a terminal and simultaneously transmit (relay) another signal using a different resource. Therefore, in this case, it is possible to select not to use the resource indicated by Multi-direction Grant for relay. That is, a repeater may adaptively determine whether or not to use the resource indicated by Multi-direction Grant for relay depending on conditions of communication with terminals under the repeater.

In addition, with the present embodiment, the term "data retransmission" is used, this not only means that the same data is transmitted, but also includes a method of controlling retransmission, for example, data and part of parity bits for a first time, and, for a second time, transmit parity bits different from the parity bits transmitted for a first time. That is, the present invention is not limited to retransmission control methods.

In addition, with the present embodiment, although a repeater relays Grant 1 and Multi-direction Grant from a base station, a base station may directly transmit these control information to a terminal. By this means, it is possible to reduce delay in relay by a repeater.

Moreover, although cases have been described with the embodiments above where the present invention is configured by hardware, the present invention may be implemented by software.

Each function block employed in the description of the aforementioned embodiments may typically be implemented as an LSI constituted by an integrated circuit. These may be individual chips or partially or totally contained on a single chip. "LSI" is adopted here but this may also be referred to as "IC," "system LSI," "super LSI" or "ultra LSI" depending on differing extents of integration.

Further, the method of circuit integration is not limited to LSI's, and implementation using dedicated circuitry or general purpose processors is also possible. After LSI manufacture, utilization of an FPGA (Field Programmable Gate Array) or a reconfigurable processor where connections and settings of circuit cells within an LSI can be reconfigured is also possible.

Further, if integrated circuit technology comes out to replace LSI's as a result of the advancement of semiconductor technology or a derivative other technology, it is naturally also possible to carry out function block integration using this technology. Application of biotechnology is also possible.

The disclosure of Japanese Patent Application No.2008-033553, filed on February 14, 2008, including the specification, drawings and abstract, is incorporated herein by reference in its entirety.

### Industrial Applicability

The radio communication base station apparatus, the radio communication relay station apparatus, the radio communication terminal apparatus, the radio communication system and the radio communication method according to the present invention allow minimization of delay and efficient use of resources, and are applicable to a mobile communication system and so forth.

## Claims

1. A radio communication base station apparatus comprising:
a resource allocating section that generates an uplink channel allocation signal for a radio communication terminal apparatus and an uplink resource allocation signal that can be used for retransmission from the radio communication terminal apparatus to a radio communication relay station apparatus and also used for relay from the radio communication relay station apparatus to a radio communication base station apparatus; and
a transmitting section that transmits the generated uplink channel allocation signal and uplink resource allocation signal.

2. A radio communication relay station apparatus comprising:
a receiving section that receives an uplink channel allocation signal for a radio communication terminal apparatus and an uplink resource allocation signal that can be used for retransmission from the radio communication terminal apparatus to a subject radio communication relay station apparatus and also used for relay from the subject radio communication relay station apparatus to a radio communication base station apparatus;
a first relay section that relays the received uplink channel allocation signal and uplink resource allocation signal to the radio communication terminal apparatus;
an error detecting section that detects whether or not a signal received from the radio communication terminal apparatus has an error; and
a second relay section that, when the error detecting section detects no error, relays the signal received from the radio communication terminal apparatus to the radio communication base station apparatus based on the uplink resource allocation signal.

3. The radio communication relay station apparatus according to claim 2, wherein, when the error detecting section detects that the signal has an error, the first relay section relays the uplink resource allocation signal to the radio communication terminal apparatus.

4. A radio communication terminal apparatus comprising:
a receiving section that receives an uplink channel allocation signal for a subject radio communication terminal apparatus and an uplink resource allocation signal that can be used for retransmission from the subject radio communication terminal apparatus to a radio communication relay station apparatus and also used for relay from the radio communication relay station apparatus to a radio communication base station apparatus; and
a transmitting section that transmits a first transmission data based on the uplink channel allocation signal and transmits retransmission data based on the uplink resource allocation signal.

5. A radio communication system comprising:
A radio communication base station apparatus including:
a resource allocating section that generates an uplink channel allocation signal for a radio communication terminal apparatus and an uplink resource allocation signal that can be used for retransmission from the radio communication terminal apparatus to a radio communication relay station apparatus and also used for relay from the radio communication relay station apparatus to a radio communication base station apparatus; and
a transmitting section that transmits the generated uplink channel allocation signal and uplink resource allocation signal,
a radio communication relay station apparatus including:
a receiving section that receives the uplink channel allocation signal and the uplink resource allocation signal;
a first relay section that relays the received uplink channel allocation signal and uplink resource allocation signal to the radio communication terminal apparatus;
an error detecting section that detects whether or not a signal received from the radio communication terminal apparatus has an error; and
a second relay section that, when the error detecting section detects no error, relays the signal received from the radio communication terminal apparatus to the radio communication base station apparatus, and
a radio communication terminal apparatus including:
a receiving section that receives the uplink channel allocation signal and the uplink resource allocation signal; and
a transmitting section that transmits a first transmission data based on the uplink channel allocation signal and transmits retransmission data based on the uplink resource allocation signal.

6. A radio communication method comprising:
when a signal transmitted from a radio communication terminal apparatus does not have an error, relaying the signal from a radio communication relay station apparatus to a radio communication base station apparatus based on an uplink resource allocation signal that can be used for retransmission from the radio communication terminal apparatus to the radio communication relay station apparatus and also used for relay from the radio communication relay station apparatus to the radio communication base station apparatus; and
when the signal transmitted from the radio communication terminal apparatus has the error, retransmitting the signal from the radio communication terminal apparatus based on the uplink resource allocation signal.

## Amended claims

### Amended claims under Art. 19.1 PCT

**1.** A radio communication base station apparatus comprising:
a resource allocating section that generates an uplink channel allocation signal for a radio communication terminal apparatus and an uplink resource allocation signal that can be used for retransmission from the radio communication terminal apparatus to a radio communication relay station apparatus and also used for relay from the radio communication relay station apparatus to a radio communication base station apparatus; and
a transmitting section that transmits the generated uplink channel allocation signal and uplink resource allocation signal.

**2.** A radio communication relay station apparatus comprising:
a receiving section that receives an uplink channel allocation signal for a radio communication terminal apparatus and an uplink resource allocation signal that can be used for retransmission from the radio communication terminal apparatus to a subject radio communication relay station apparatus and also used for relay from the subject radio communication relay station apparatus to a radio communication base station apparatus;
a first relay section that relays the received uplink channel allocation signal and uplink resource allocation signal to the radio communication terminal apparatus;
an error detecting section that detects whether or not a signal received from the radio communication terminal apparatus has an error; and
a second relay section that, when the error detecting section detects no error, relays the signal received from the radio communication terminal apparatus to the radio communication base station apparatus based on the uplink resource allocation signal.

**3.** The radio communication relay station apparatus according to claim 2, wherein, when the error detecting section detects that the signal has an error, the first relay section relays the uplink resource allocation signal to the radio communication terminal apparatus.

**4.** A radio communication terminal apparatus comprising:
a receiving section that receives an uplink channel allocation signal for a subject radio communication terminal apparatus and an uplink resource allocation signal that can be used for retransmission from the subject radio communication terminal apparatus to a radio communication relay station apparatus and also used for relay from the radio communication relay station apparatus to a radio communication base station apparatus; and
a transmitting section that transmits a first transmission data based on the uplink channel allocation signal and transmits retransmission data based on the uplink resource allocation signal.

**5.** (Amended)
A radio communication method comprising:
when a signal transmitted from a radio communication terminal apparatus does not have an error, relaying the signal from a radio communication relay station apparatus to a radio communication base station apparatus based on an uplink resource allocation signal that can be used for retransmission from the radio communication terminal apparatus to the radio communication relay station apparatus and also used for relay from the radio communication relay station apparatus to the radio communication base station apparatus; and
when the signal transmitted from the radio communication terminal apparatus has the error, retransmitting the signal from the radio communication terminal apparatus based on the uplink resource allocation signal.

**6.** (Amended)
A radio communication method comprising:
generating, by a radio communication base station apparatus, an uplink channel allocation signal for a radio communication terminal apparatus and an uplink resource allocation signal that can be used for retransmission from the radio communication terminal apparatus to a radio communication relay station apparatus and also used for relay from the radio communication relay station apparatus to the radio communication base station apparatus; and
transmitting the generated uplink channel allocation signal and uplink resource allocation signal from the radio communication base station apparatus.

**7.** (Added)
A radio communication method comprising:
receiving, by a radio communication terminal apparatus, an uplink channel allocation signal for the radio communication terminal apparatus and an uplink resource allocation signal that can be used for retransmission from the radio communication terminal apparatus to a radio communication relay station apparatus and also used for relay from the radio communication relay station apparatus to a radio communication base station apparatus; and
transmitting, by the radio communication terminal apparatus, a first transmission data based on the uplink channel allocation signal and transmitting retransmission data based on the uplink resource allocation signal.
